# EUROPÄISCHE PATENTSCHRIFT

(11) **EP 3 466 240 B1**
(45) Veröffentlichungstag und Bekanntmachung des Hinweises auf die Patenterteilung: **09.03.2022**
(21) Anmeldenummer: 18185672.5
(22) Anmeldetag: 26.07.2018
(51) Int. Cl.: A01D 41/127, B30B 9/30

(54) **VERFAHREN FÜR DEN BETRIEB EINER SELBSTFAHRENDEN LANDWIRTSCHAFTLICHEN ARBEITSMASCHINE**
METHOD FOR OPERATING A SELF-PROPELLED AGRICULTURAL WORKING MACHINE
PROCÉDÉ DE FONCTIONNEMENT D'UN ENGIN AGRICOLE AUTOMATIQUE

(30) Priorität: 29.09.2017 DE 102017122711
(43) Veröffentlichungstag der Anmeldung: 10.04.2019
(73) Patentinhaber: CLAAS E-Systems GmbH, 49201 Dissen am Teutoburger Wald (DE)
(72) Erfinder: Neitemeier, Dennis, 59510 Lippetal (DE); Kettelhoit, Boris, 33335 Gütersloh (DE); Skiba, Andreas, 33647 Bielefeld (DE); Krause, Thilo, 39249 Glinde (DE)
(74) Vertreter: Budach, Steffen

(56) Entgegenhaltungen:
- DE-A1-102015 116 586
- US-A1- 2003 184 747
- GIULIO REINA ET AL: "Towards Autonomous Agriculture: Automatic Ground Detection Using Trinocular Stereovision", SENSORS, Bd. 12, Nr. 12, 12. September 2012 (2012-09-12), Seiten 12405-12423, XP055401661, DOI: 10.3390/s120912405

## Beschreibung

Die Erfindung betrifft ein Verfahren für den Betrieb einer selbstfahrenden landwirtschaftlichen Arbeitsmaschine gemäß dem Obergriff von Anspruch 1 sowie eine solche selbstfahrende Arbeitsmaschine gemäß Anspruch 11.

Der Begriff "selbstfahrende landwirtschaftliche Arbeitsmaschine" ist vorliegend weit zu verstehen. Darunter fallen nicht nur Erntemaschinen, wie Mähdrescher und Feldhäcksler, sondern auch Zugmaschinen, wie Traktoren oder dergleichen.

Bei dem Betrieb einer in Rede stehenden, selbstfahrenden landwirtschaftlichen Arbeitsmaschine kommt der sensorbasierten Überwachung des Umfelds der Arbeitsmaschine zunehmende Bedeutung zu. Dadurch, dass das Umfeld der Arbeitsmaschine nicht in standardisierter, sensorisch leicht erfassbarer Form vorliegt, sondern vielmehr in gewissen Grenzen eine nicht deterministische Struktur aufweist, stellt die sensorbasierte Erfassung von vorbestimmten Eigenschaften des Umfelds der Arbeitsmaschine eine Herausforderung dar.

Das bekannte Verfahren (DE 10 2015 116 586 A1), von dem die Erfindung ausgeht, sieht in einer Variante eine Sensoranordnung vor, die ein kamerabasiertes Sensorsystem und ein laserbasiertes Sensorsystem aufweist. Dabei werden Eigenschaften des Umfelds basierend auf den Sensorinformationen dieser beiden Sensorsysteme erfasst. Hierfür ist eine vergleichsweise rechenintensive Methodik erforderlich, bei der sich darüber hinaus eine intuitive Darstellung der jeweils erfassten Eigenschaften des Umfelds nicht ohne weiteren Aufwand ergibt.

Der Erfindung liegt das Problem zugrunde, das bekannte Verfahren derart auszugestalten und weiterzubilden, dass die sensorbasierte Erfassung vorbestimmter Eigenschaften des Umfelds der Arbeitsmaschine sowie eine übersichtliche Darstellung der jeweils erfassten Eigenschaften möglich ist.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, die Kamerabilder des kamerabasierten Sensorsystems zunächst zu segmentieren und anschließend die segmentierten Kamerabilder mit den Sensorinformationen des laserbasierten Sensorsystems zu fusionieren.

Im Einzelnen wird vorgeschlagen, dass das Fahrerassistenzsystem ein Bildverarbeitungssystem zur Verarbeitung der Kamerabilder aufweist, wobei die Kamerabilder von dem Bildverarbeitungssystem nach einer Segmentierungsvorschrift in Bildsegmente segmentiert werden, wobei ein Sensorfusionsmodul vorgesehen ist und wobei die segmentierten Kamerabilder von dem Sensorfusionsmodul mit den Sensorinformationen des laserbasierten Sensorsystems fusioniert werden.

Das vorschlagsgemäße Verfahren ist insoweit vorteilhaft, als die Segmentierung der Kamerabilder zu einer beträchtlichen Reduzierung des zu verarbeitenden Datenvolumens führt, das die Sensorinformationen des kamerabasierten Sensorsystems repräsentiert. Die Anwendung der Sensorinformationen des laserbasierten Sensorsystems im Rahmen der Sensorfusion ist gewissermaßen eine Anreicherung des segmentierten Kamerabilds, was mit einem entsprechenden Anstieg des Informationsgehalts des segmentierten Kamerabilds einhergeht. Die in obigem Sinne angereicherten Bildsegmente lassen sich auf einfache Weise dem ursprünglichen Kamerabild überlagern, so dass sich eine intuitive Anzeige auch komplexer Umfeldbedingungen ergibt. Die angereicherten Bildsegmente sind auf besonders einfache Weise zu klassifizieren, wie weiter unten erläutert wird.

Bei dem laserbasierten Sensorsystem handelt es sich gemäß Anspruch 2 vorzugsweise um ein Sensorsystem, bei dem die Sensorinformationen bezogen auf die Feldebene Höheninformationen sind. Die Feldebene ist die Ebene, entlang der sich der relevante Umfeldbereich erstreckt. Im Allgemeinen handelt es sich hierbei um die horizontale Ebene, sofern der relevante Umfeldbereich keine Steigung gegenüber der horizontalen Ebene aufweist. Mittels des laserbasierten Sensorsystems lässt sich also die Höhe des Bestands, die Höhe von Hindernissen oder dergleichen erfassen.

Vorzugsweise wird der relevante Umfeldbereich sowohl von dem kamerabasierten Sensorsystem als auch von dem laserbasierten Sensorsystem erfasst. Dies bedeutet, dass jedem Bildsegment eine Reihe von Sensorinformationen des laserbasierten Sensorsystems zugeordnet ist. Entsprechend wird gemäß Anspruch 3 zumindest einem Teil der Bildsegmente jeweils mindestens eine Höheninformation zugeordnet. Die derart angereicherten Bildsegmente ermöglichen eine besonders einfache Erfassung von Eigenschaften des Umfelds der Arbeitsmaschine. Insbesondere eine Klassifizierung der Bildsegmente gemäß Anspruch 4 wird vereinfacht, da zur Klassifizierung der Bildsegmente nicht nur der Umriss und die Farbgestaltung, sondern auch eine Höheninformation vorliegt. Dies wird gemäß Anspruch 4 vorteilhafterweise im Rahmen der Klassifizierung der Bildsegmente genutzt.

Für die Klasseneigenschaft zur Definition einer obigen Klasse sind ganz verschiedene vorteilhafte Möglichkeiten denkbar. Gemäß Anspruch 5 ist die Klasseneigenschaft einer Klasse beispielsweise durch die Existenz zu erntenden Gutbestands definiert. Denkbar ist auch, dass die Klasseneigenschaft einer Klasse durch die Existenz eines lebenden oder eines nicht lebenden Hindernisses definiert ist. Andere Möglichkeiten der Definition der Klasseneigenschaft sind in Anspruch 5 in nicht abschließender Form genannt.

Die weiter bevorzugten Ausgestaltungen gemäß den Ansprüchen 6 bis 8 betreffen die Erzeugung eines Anzeigebilds durch das Bildverarbeitungssystem, in dem das Ausgangs-Kamerabild mit zumindest einem Teil der klassifizierten Bildsegmente überlagert sind. Die farbliche Gestaltung der Bildsegmente gemäß Anspruch 7 und die selektive Anzeige der Bildsegmente vorbestimmter Klassen gemäß Anspruch 8 bilden die Basis für eine besonders intuitive und übersichtliche Anzeige der Eigenschaften des relevanten Umfeldbereichs.

Die ebenfalls bevorzugten Ausgestaltungen gemäß den Ansprüchen 9 und 10 betreffen vorteilhafte Steueraktionen des Fahrerassistenzsystems. Beispielsweise kann es gemäß Anspruch 9 vorgesehen sein, dass eine Steueraktion die Ausgabe des Anzeigebilds über die Mensch-Maschine-Schnittstelle des Fahrerassistenzsystems ist. Alternativ oder zusätzlich kann in Abhängigkeit von der Lage der klassifizierten Bildsegmente die Ausgabe einer Warnmeldung über die Mensch-Maschine-Schnittstelle vorgesehen sein. Bei der besonders bevorzugten Ausgestaltung gemäß Anspruch 10 führt das Fahrerassistenzsystem selbsttätig eine Notroutine durch, sofern ein klassifiziertes Bildsegment ein Hindernis im zukünftigen Fahrweg der Arbeitsmaschine repräsentiert. Im einfachsten Fall handelt es sich bei der Notroutine um eine Stopproutine zum Anhalten der Arbeitsmaschine. Dadurch, dass die vorschlagsgemäße Sensorfusion eine relativ hohe Sicherheit bei der Erfassung von Hindernissen ermöglicht, ist die selbsttätige Durchführung der Notroutine mit einer beträchtlichen Steigerung der Betriebssicherheit der Arbeitsmaschine verbunden.

Nach einer weiteren Lehre gemäß Anspruch 11, der eigenständige Bedeutung zukommt, wird eine selbstfahrende landwirtschaftliche Arbeitsmaschine als solche zur Durchführung eines vorschlagsgemäßen Verfahrens beansprucht. Auf alle Ausführungen, die geeignet sind, die Arbeitsmaschine als solche zu beschreiben, darf verwiesen werden.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße selbstfahrende landwirtschaftliche Arbeitsmaschine in einer Ansicht von oben,
- Fig. 2: das Fahrerassistenzsystem der Arbeitsmaschine gemäß Fig. 1 in einer ganz schematischen Darstellung und
- Fig. 3: einen beispielhaften Ablauf einer vorschlagsgemäßen Sensorfusion bei einer Arbeitsmaschine gemäß Fig. 1.

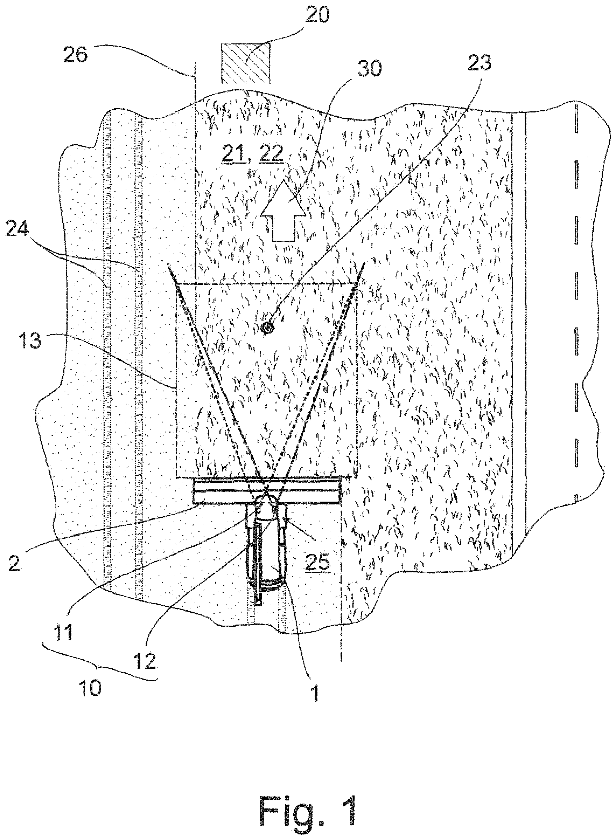

Die vorschlagsgemäße Lösung lässt sich auf einen weiten Bereich selbstfahrender landwirtschaftlicher Arbeitsmaschinen anwenden. Dazu gehören Mähdrescher, Feldhäcksler, Zugmaschinen, insbesondere Traktoren, oder dergleichen. Bei dem dargestellten und insoweit bevorzugten Ausführungsbeispiel handelt es sich bei der Arbeitsmaschine 1 um einen Mähdrescher, der in an sich üblicher Weise mit einem Vorsatzgerät 2 ausgestattet ist. Die Arbeitsmaschine 1 von oben zeigt Fig. 1 während des Ernteprozesses.

Die vorschlagsgemäße Arbeitsmaschine 1 ist mit mindestens einem Arbeitsorgan 3-8 ausgestattet. Eine als Mähdrescher ausgestaltete Arbeitsmaschine 1 weist vorzugsweise die Arbeitsorgane Fahrantrieb 3, Schneidwerk 4, Dreschwerk 5, Abscheidevorrichtung 6, Reinigungsvorrichtung 7 und Verteilvorrichtung 8 auf.

Die Arbeitsmaschine 1 ist ferner mit einem Fahrerassistenzsystem 9 zum Erzeugen von Steueraktionen innerhalb der Arbeitsmaschine 1 ausgestattet. Die Steueraktionen können einerseits die Anzeige von Informationen für den Benutzer und andererseits die Ansteuerung und Parametrierung der Arbeitsorgane 3-8 betreffen.

Weiter ist der Arbeitsmaschine 1 eine Sensoranordnung 10 zur Erzeugung von Umfeldinformationen zugeordnet, wobei das Fahrerassistenzsystem 9 die Steueraktionen basierend auf den Umfeldinformationen erzeugt. Die Sensoranordnung 10 weist ein kamerabasiertes Sensorsystem 11 und ein laserbasiertes Sensorsystem 12 auf, die jeweils an der Arbeitsmaschine 1, vorzugsweise in einer gegenüber der Feldebene erhöhten Position, angeordnet sind. Die beiden Sensorsysteme 11, 12 erzeugen jeweils Sensorinformationen zu einem vorbestimmten, relevanten Umfeldbereich 13 der Arbeitsmaschine 1. In dem darstellten und insoweit bevorzugten Ausführungsbeispiel ist der relevante Umfeldbereich 13 als Vorfeldbereich der Arbeitsmaschine 1 vorbestimmter Form und Größe definiert.

Vorzugsweise ist es vorgesehen, dass sich die Erfassungsbereiche der beiden Sensorsysteme 11, 12 überlappen. Die Sensorinformationen des kamerabasierten Sensorsystems 11 liegen als Ausgangs-Kamerabilder 14 vor, die je nach Anwendungsfall vorverarbeitet sein können. Die Ausgangs-Kamerabilder 14 werden von dem Kamera-Sensorsystem 11 laufend, vorzugsweise zyklisch, erzeugt und entsprechend sequentiell in noch zu erläuternder, vorschlagsgemäßer Weise bearbeitet. Die Ausgangs-Kamerabilder 14 stellen also eine Serie von Bildern dar.

Das kamerabasierte Sensorsystem 12 weist vorzugsweise mindestens eine Kamera, insbesondere mindestens eine Farbbildkamera, zur Erzeugung der Ausgangs-Kamerabilder 14 auf. Bei der Kamera kann es sich um eine 2D-Kamera oder um eine 3D-Kamera handeln. Das laserbasierte Sensorsystem 12 ist vorzugsweise mit mindestens einem abstandsmessenden Lasersensor, insbesondere Laserscanner, ausgestattet. In besonders bevorzugter Ausgestaltung weist das laserbasierte Sensorsystem 12 mindestens einen LIDAR-Sensor auf.

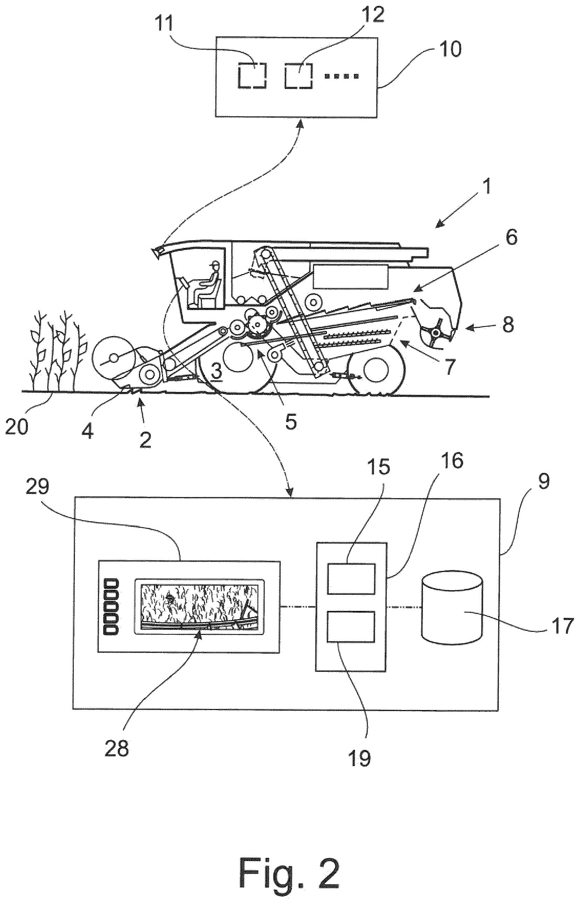

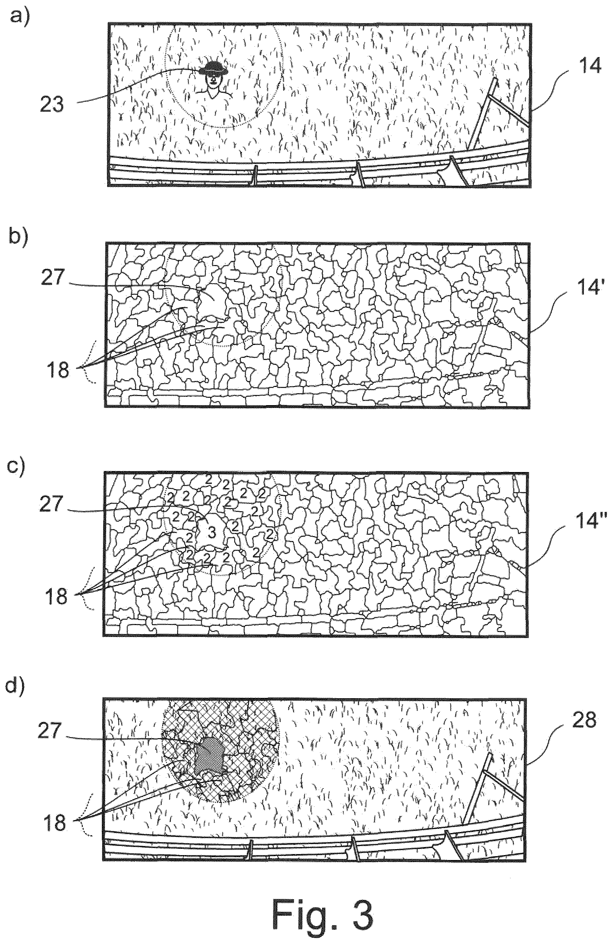

Das Fahrerassistenzsystem 9 weist ein Bildverarbeitungssystem 15 zur Verarbeitung der Ausgangs-Kamerabilder 14 auf. Hier und vorzugsweise wird das Bildverarbeitungssystem 15 von einer Rechenvorrichtung 16 des Fahrerassistenzsystems 9 bereitgestellt, die mit einer digitalen Datenspeichereinheit 17 datentechnisch gekoppelt ist (Fig. 2). Vorschlagsgemäß werden die Ausgangs-Kamerabilder 14 (Fig. 3a)) von dem Bildverarbeitungssystem 15 nach einer Segmentierungsvorschrift in Bildsegmente 18 segmentiert. Für die Segmentierungsvorschrift sind je nach Anwendungsfall unterschiedliche Varianten vorteilhaft. Beispielsweise kann die Segmentierung basierend auf der Farbverteilung über das jeweilige Ausgangs-Kamerabild vorgenommen werden. Hinsichtlich bevorzugter Verfahren zur Segmentierung wird auf die deutsche Patentanmeldung DE 10 2016 118 227.3 verwiesen, die auf die Anmelderin zurückgeht .

Zusätzlich zu dem Bildverarbeitungssystem 15 oder integriert in das Bildverarbeitungssystem 15 ist ein Sensorfusionsmodul 19 vorgesehen, wobei die segmentierten Kamerabilder 14' (Fig. 3b)) von dem Sensorfusionsmodul 19 mit den Sensorinformationen des laserbasierten Sensorsystems 12 fusioniert werden. Ein derart fusioniertes Kamerabild 14" ist in Fig. 3c) angedeutet.

Hier und vorzugsweise handelt es sich bei den Sensorinformationen des laserbasierten Sensorsystems 12 um Höheninformationen, die auf die Feldebene 20 bezogen sind. Dabei ist das laserbasierte Sensorsystem vorzugsweise mit mindestens einem laserbasierten LIDAR-Sensor ausgestattet.

Fig. 3c) zeigt für einen Bildausschnitt, dass im Rahmen der Sensorfusion zumindest einem Teil der Bildsegmente 18 jeweils genau eine Höheninformation zugeordnet wird. Die Höheninformation ist hier und vorzugsweise aus den Sensorinformationen des laserbasierten Sensorsystems 12 für das Umfeldsegment in dem relevanten Umfeldbereich 13, das zu dem jeweiligen Bildsegment 18 korrespondiert, abgeleitet worden. Dabei kann es grundsätzlich auch vorgesehen sein, dass einem Bildsegment 18 mehr als eine Höheninformation, insbesondere mehrere Höheninformationen, zugeordnet sind. Bei der hier und vorzugsweise einzigen Höheninformation eines Bildsegments 18 kann es sich beispielsweise um den Maximalwert aller zu dem korrespondierenden Umfeldsegment erfasster Höheninformationen oder um deren Mittelwert handeln. In Fig. 3c) sind die Höheninformationen jeweils als Zahlenwert angedeutet.

In einem nächsten Verfahrensschritt ist es vorzugsweise vorgesehen, dass die Bildsegmente 18 von dem Bildverarbeitungssystem 15 nach einer Klassifizierungsvorschrift in Klassen mit Klasseneigenschaften klassifiziert werden, so dass den Bildsegmenten 18 jeweils eine Klasse zugeordnet wird. Wesentlich dabei ist, dass nicht nur die Charakteristik des betreffenden Bildsegments 18, sondern auch die Sensorinformationen des laserbasierten Sensorsystems 12 bei der Klassifizierung berücksichtigt werden. Durch die zusätzliche Berücksichtigung der Sensorinformationen des laserbasierten Sensorsystems 12 ergibt sich eine besonders hohe Reproduzierbarkeit bei der Klassifizierung der Bildsegmente 18.

Die Klassifizierungsvorschrift kann auch vorsehen, dass bei der Festlegung der jeweiligen Klasse für ein Bildsegment 18 die das Bildsegment 18 umgebenden Bildsegmente berücksichtigt werden. Damit kann beispielsweise bei der Klassifizierung eines Bildsegments als "lebendes Hindernis" genutzt werden, dass ein lebendes Hindernis, zumindest eine Person, regelmäßig eine Spur im Bestand verursacht, die in der hier vorliegenden Zeichnung allerdings nicht dargestellt ist.

Die in der Klassifizierungsvorschrift enthaltene Klasseneigenschaft einer Klasse kann in unterschiedlicher Weise definiert sein. In einer bevorzugten Variante ist die Klasseneigenschaft einer Klasse durch die Existenz zu erntenden Gutbestands 21 definiert. Alternativ oder zusätzlich ist die Klasseneigenschaft einer Klasse durch die Existenz stehenden Gutbestands 22 definiert. Alternativ oder zusätzlich ist die Klasseneigenschaft einer Klasse durch die Existenz eines lebenden Hindernisses 23 definiert. Alternativ oder zusätzlich ist die Klasseneigenschaft einer Klasse durch die Existenz eines nicht lebenden Hindernisses definiert. Alternativ oder zusätzlich ist die Klasseneigenschaft einer Klasse durch die Existenz einer Fahrgasse 24 definiert. Alternativ oder zusätzlich ist die Klasseneigenschaft einer Klasse durch die Existenz eines abgeernteten Bereichs 25 definiert. Alternativ oder zusätzlich ist die Klasseneigenschaft einer Klasse schließlich durch die Existenz einer Bestandskante 26 definiert. Der beispielhafte Ablauf gemäß Fig. 3 ist auf die Situation gerichtet, in der sich in dem relevanten Umfeldbereich 13 ein lebendes Hindernis 23, hier eine Person, befindet. Die Person 23 ist in Fig. 3a) zu erkennen.

Im Rahmen der vorschlagsgemäßen Segmentierung kommt hier und vorzugsweise der in Fig. 3a) gezeigten Person 23 ein in Fig. 3b gezeigtes Bildsegment 27 zu, das gemäß Fig. 3c) im Rahmen der Sensorfusion mit der Höheninformation "3" versehen sind, während die umgebenden Bildsegmente 18 mit der Höheninformation "2" versehen sind. Dabei steht die Höheninformation "3" für eine größere Höhe als die Höheninformation "2".

Im Rahmen der anschließenden Klassifizierung wird aus Faktoren wie der Form, des Volumens oder der Farbe des Segments 27 in Verbindung mit dem Faktor der Höheninformation "3" darauf geschlossen, dass das Bildsegment 27 der Klasse eines Hindernisses zuzurechnen ist. Sofern sich aus der Folge der Kamerabilder zusätzlich eine in der Klassifizierungsvorschrift festgelegte, räumliche Fluktuation des Bildsegments 27 ergibt, kann dem Bildsegment 27 die Klasse "lebendes Hindernis" zugeordnet werden. Andere Beispiele für die Ermittlung der Klasse eines Bildsegments 18 sind denkbar. Hier wird deutlich, dass mit der vorschlagsgemäßen Lösung eine reproduzierbare Klassifizierung von Bildsegmenten 18 mit der Verarbeitung geringer Datenmengen verbunden ist. Damit lässt sich das vorschlagsgemäße Verfahren mit vergleichsweise geringer Rechenleistung und insbesondere im laufenden Arbeitsbetrieb, insbesondere in Echtzeit, umsetzen.

Das vorschlagsgemäße Verfahren ist aber auch im Hinblick auf die Anzeige der erfassten Eigenschaften des relevanten Umfeldbereichs 13 vorteilhaft. Vorzugsweise ist es so, dass von dem Bildverarbeitungssystem 15 ein Anzeigebild 28 erzeugt wird, in dem das Ausgangs-Kamerabild 14 mit zumindest einem Teil der klassifizierten Bildsegmente 18, 27 überlagert ist. Dies ist in Fig. 3d) am Beispiel des ein lebendes Hindernis, hier die Person 23, repräsentierenden Bildsegments 27 gezeigt. Dies entspricht dem grundsätzlichen Ansatz der sogenannten "Augmented-Reality", der vorsieht, dass einem weitgehend unbearbeiteten Kamerabild ortsspezifische, künstlich erzeugte Zusatzinformationen überlagert werden.

Eine besonders übersichtliche Darstellung ergibt sich dadurch, dass in dem Anzeigebild 28 die Bildsegmente 18 in Abhängigkeit von der jeweils zugeordneten Klasse farblich unterschiedlich dargestellt sind. Anstelle unterschiedlicher Farbe können auch unterschiedliche Schraffierungen oder dergleichen genutzt werden.

Ferner kann es vorgesehen sein, dass in dem Anzeigebild 28 eine selektive Anzeige von Bildsegmenten 18 vorgenommen wird, dass also beispielsweise Bildsegmente 18 vorbestimmter Klassen nicht angezeigt werden.

Das Fahrerassistenzsystem 9 kann die Ergebnisse des vorschlagsgemäßen Verfahrens in unterschiedlicher Weise verwenden. Vorzugsweise ist es vorgesehen, dass das Fahrerassistenzsystem 9 eine Mensch-Maschine-Schnittstelle 29 aufweist, wobei eine Steueraktion die Ausgabe des Anzeigebilds 28 über die Mensch-Maschine-Schnittstelle 29 ist. Alternativ oder zusätzlich kann es vorgesehen sein, dass in Abhängigkeit von den klassifizierten Bildsegmenten 18, insbesondere in Abhängigkeit von der Lage der klassifizierten Bildsegmente 20, die Ausgabe einer Warnmeldung über die Mensch-Maschine-Schnittstelle 29 als Steueraktion ausgegeben wird.

Bei einem höheren Automatisierungsgrad der Arbeitsmaschine 1 ist es denkbar, dass für den Fall, dass die klassifizierten Bildsegmente 18 im zukünftigen Fahrweg 30 der Arbeitsmaschine 1 ein Hindernis repräsentieren, die Steueraktion des Fahrerassistenzsystems 9 die Durchführung einer Notroutine ist. Bei dieser Notroutine kann es sich um eine Stopproutine zum Anhalten der Arbeitsmaschine 1 und/oder um eine Ausweichroutine zum Ausweichen der Arbeitsmaschine 1 vor dem Hindernis handeln.

Nach einer weiteren Lehre, der eigenständige Bedeutung zukommt, wird die selbstfahrende landwirtschaftliche Arbeitsmaschine 1 zur Durchführung eines oben erläuterten, vorschlagsgemäßen Verfahrens als solche beansprucht. Auf alle diesbezüglichen Ausführungen darf verwiesen werden.

In besonders bevorzugter Ausgestaltung ist es vorgesehen, dass das Fahrerassistenzsystem 9, wie oben angesprochen, eine Rechenvorrichtung 16 aufweist, die das oben beschriebene Bildverarbeitungssystem 15 bereitstellen kann. Alternativ oder zusätzlich kann es vorgesehen sein, dass das Sensorfusionsmodul 19 von dem Fahrerassistenzsystem 9 der Arbeitsmaschine 1, insbesondere von der Rechenvorrichtung 16, bereitgestellt wird.

Alternativ ist es denkbar, dass zumindest ein Teil des Bildverarbeitungssystems 15 und/oder zumindest ein Teil des Sensorfusionsmoduls 19 auf einem Rechner realisiert ist, der separat von der Arbeitsmaschine 1, insbesondere bei einem Lohndienstleister oder dergleichen, betrieben wird.

Zusammenfassend lässt sich feststellen, dass mit der vorschlagsgemäßen Lösung nicht nur eine Erfassung vorbestimmter Eigenschaften des relevanten Umfeldbereichs 13 mit einfachen Mitteln umsetzbar ist, sondern dass auch die Anzeige selbst komplexer Umfeldbedingungen auf besonders übersichtliche Weise möglich ist.

### Bezugszeichenliste

- 1: Arbeitsmaschine
- 2: Vorsatzgerät
- 3-8: Arbeitsorgan
- 9: Fahrerassistenzsystem
- 10: Sensoranordnung
- 11: kamerabasiertes Sensorsystem
- 12: laserbasiertes Sensorsystem
- 13: relevanter Umfeldbereich
- 14: Ausgangs-Kamerabild
- 15: Bildverarbeitungssystem
- 16: Rechenvorrichtung
- 17: Datenspeichereinheit
- 18: Bildsegment
- 19: Sensorfusionsmodul
- 20: Feldebene
- 21: zu erntender Gutbestand
- 22: stehender Gutbestand
- 23: lebendes Hindernis
- 24: Fahrgasse
- 25: abgeernteter Bereich
- 26: Bestandskante
- 27: Personensegment
- 28: Anzeigebild
- 29: Mensch-Maschine-Schnittstelle
- 30: Fahrweg

## Patentansprüche

1. Verfahren für den Betrieb einer selbstfahrenden landwirtschaftlichen Arbeitsmaschine (1) mit mindestens einem Arbeitsorgan (3-8) und mit einem Fahrerassistenzsystem (9) zum Erzeugen von Steueraktionen innerhalb der Arbeitsmaschine (1), wobei eine Sensoranordnung (10) zur Erzeugung von Umfeldinformationen vorgesehen ist, wobei das Fahrerassistenzsystem (9) die Steueraktionen basierend auf den Umfeldinformationen erzeugt, wobei die Sensoranordnung (10) ein kamerabasiertes Sensorsystem (11) und ein laserbasiertes Sensorsystem (12) aufweist, die jeweils Sensorinformationen zu einem vorbestimmten, relevanten Umfeldbereich (13) der Arbeitsmaschine (1) erzeugen,
wobei die Sensorinformationen des kamerabasierten Sensorsystems (11) als Ausgangs-Kamerabilder (14) vorliegen,
**dadurch gekennzeichnet,**
**dass** das Fahrerassistenzsystem (9) ein Bildverarbeitungssystem (15) zur Verarbeitung der Ausgangs-Kamerabilder (14) aufweist, dass die Ausgangs-Kamerabilder (14) von dem Bildverarbeitungssystem (15) nach einer Segmentierungsvorschrift in Bildsegmente (18) segmentiert werden, dass ein Sensorfusionsmodul (19) vorgesehen ist und dass die segmentierten Kamerabilder (14') von dem Sensorfusionsmodul (19) mit den Sensorinformationen des laserbasierten Sensorsystems (12) fusioniert werden.

2. Verfahren nach Anspruch 1, **dadurch gekennzeichnet, dass** die Sensorinformationen des laserbasierten Sensorsystems (12) bezogen auf die Feldebene (20) Höheninformationen sind.

3. Verfahren nach Anspruch 1 oder 2, **dadurch gekennzeichnet, dass** im Rahmen der Sensorfusion zumindest einem Teil der Bildsegmente (18) jeweils mindestens eine, vorzugsweise genau eine, Höheninformation zugeordnet wird, die aus den Sensorinformationen des laserbasierten Sensorsystems (12) für das Umfeldsegment, das zu dem jeweiligen Bildsegment (18) korrespondiert, abgeleitet werden.

4. Verfahren nach einem der vorhergehenden Ansprüche, **dadurch gekennzeichnet, dass** die Bildsegmente (18) von dem Bildverarbeitungssystem (15) nach einer Klassifizierungsvorschrift in Klassen mit Klasseneigenschaften klassifiziert werden, so dass den Bildsegmenten (18) jeweils eine Klasse zugeordnet wird, und dass die Sensorinformationen des laserbasierten Sensorsystems (12) bei der Klassifizierung berücksichtigt werden.

5. Verfahren nach einem der vorhergehenden Ansprüche, **dadurch gekennzeichnet, dass** die Klasseneigenschaft einer Klasse durch die Existenz zu erntenden Gutbestands (21) definiert ist, und/oder, dass die Klasseneigenschaft einer Klasse durch die Existenz stehenden Gutbestands (22) definiert ist, und/oder, dass die Klasseneigenschaft einer Klasse durch die Existenz eines lebenden Hindernisses (23) definiert ist, und/oder dass die Klasseneigenschaft einer Klasse durch die Existenz eines nicht lebenden Hindernisses definiert ist, und/oder, dass die Klasseneigenschaft einer Klasse durch die Existenz einer Fahrgasse (24) definiert ist, und/oder, dass die Klasseneigenschaft einer Klasse durch die Existenz eines abgeernteten Bereichs (25) definiert ist, und/oder, dass die Klasseneigenschaft einer Klasse durch die Existenz einer Bestandskante (26) definiert ist.

6. Verfahren nach einem der vorhergehenden Ansprüche, **dadurch gekennzeichnet, dass** von dem Bildverarbeitungssystem (15) ein Anzeigebild (28) erzeugt wird, in dem das Ausgangs-Kamerabild (14) mit zumindest einem Teil der klassifizierten Bildsegmente überlagert ist.

7. Verfahren nach einem der vorhergehenden Ansprüche, **dadurch gekennzeichnet, dass** in dem Anzeigebild (28) die Bildsegmente (18) in Abhängigkeit von der jeweils zugeordneten Klasse farblich unterschiedlich dargestellt sind.

8. Verfahren nach einem der vorhergehenden Ansprüche, **dadurch gekennzeichnet, dass** in dem Anzeigebild Bildsegmente (18) vorbestimmter Klassen nicht angezeigt werden.

9. Verfahren nach einem der vorhergehenden Ansprüche, **dadurch gekennzeichnet, dass** das Fahrerassistenzsystem (9) eine Mensch-Maschine-Schnittstelle (29) aufweist und dass eine Steueraktion die Ausgabe des Anzeigebilds (28) über die Mensch-Maschine-Schnittstelle (29) und/oder in Abhängigkeit der klassifizierten Bildsegmente die Ausgabe einer Warnmeldung über die Mensch-Maschine-Schnittstelle (29) ist.

10. Verfahren nach einem der vorhergehenden Ansprüche, **dadurch gekennzeichnet, dass** für den Fall, dass die klassifizierten Bildsegmente im zukünftigen Fahrweg (30) der Arbeitsmaschine (1) ein Hindernis repräsentieren, die Steueraktion des Fahrerassistenzsystems (9) die Durchführung einer Notroutine ist, vorzugsweise, dass die Notroutine eine Stopproutine zum Anhalten der Arbeitsmaschine (1) und/oder eine Ausweichroutine zum Ausweichen der Arbeitsmaschine (1) vordem Hindernis umfasst.

11. Selbstfahrende landwirtschaftliche Arbeitsmaschine, **dadurch gekennzeichnet, dass** die Arbeitsmaschine zur Durchführung eines Verfahrens nach einem der vorhergehenden Ansprüche vorgesehen und eingerichtet.

12. Selbstfahrende landwirtschaftliche Arbeitsmaschine nach Anspruch 11, **dadurch gekennzeichnet, dass** das Sensorfusionsmodul (19) von dem Fahrerassistenzsystem (9) der Arbeitsmaschine (1) bereitgestellt wird.

## Claims

1. A method of operating a self-propelled agricultural working machine (1) comprising at least one working member (3-8) and a driver assist system (9) for generating control actions within the working machine (1), wherein there is provided a sensor arrangement (10) for generating surroundings information, wherein the driver assist system (9) generates the control actions based on the surroundings information, wherein the sensor arrangement (10) has a camera-based sensor system (11) and a laser-based sensor system (12) which respectively generate sensor information relating to a predetermined relevant surroundings region (13) of the working machine (1),
wherein the sensor information of the camera-based sensor system (11) is present as output camera images (14),
**characterised in that**
the driver assist system (9) has an image processing system (15) for processing the output camera images (14), that the output camera images (14) are segmented by the image processing system (15) into image segments (18) in accordance with a segmentation rule, that there is provided a sensor fusion module (19) and that the segmented camera images (14') are fused by the sensor fusion module (19) with the sensor information of the laser-based sensor system (12).

2. A method according to claim 1 **characterised in that** the sensor information of the laser-based sensor system (12) is height information relating to the field plane (20).

3. A method according to claim 1 or claim 2 **characterised in that** in the course of sensor fusion at least one and preferably precisely one item of height information is respectively associated with at least a part of the image segments (18), which height information is derived from the sensor information of the laser-based sensor system (12) for the surroundings segment that corresponds to the respective image segment (18).

4. A method according to one of the preceding claims **characterised in that** the image segments (18) are classified by the image processing system (15) according with a classification rule into classes with class properties so that a respective class is associated with the image segments (18) and that the sensor information of the laser-based sensor system (12) is taken into consideration in the classification.

5. A method according to one of the preceding claims **characterised in that** the class property of a class is defined by the existence of crop stand (21) to be harvested and/or that the class property of a class is defined by the existence of standing crop stand (22) and/or that the class property of a class is defined by the existence of a living obstacle (23) and/or that the class property of a class is defined by the existence of a non-living obstacle and/or that the class property of a class is defined by the existence of a tramline (24) and/or that the class property of a class is defined by the existence of a harvested region (25) and/or that the class property of a class is defined by the existence of a stand edge (26).

6. A method according to one of the preceding claims **characterised in that** a display image is generated by the image processing system (15), in which image the output camera image (14) is superimposed with at least a part of the classified image segments.

7. A method according to one of the preceding claims **characterised in that** in the display image (28) the image segments (18) are represented in different colours in dependence on the respective associated class.

8. A method according to one of the preceding claims **characterised in that** image segments (18) of predetermined classes are not displayed in the display image.

9. A method according to one of the preceding claims **characterised in that** the driver assist system (9) has a human-machine interface (29) and that a control action is the output of the display image (28) by way of the human-machine interface (29) and/or in dependence on the classified image segments the output of a warning message by way of the human-machine interface (29).

10. A method according to one of the preceding claims **characterised in that** for the situation where the classified image segments represent an obstacle in the future tramline (30) of the working machine (1) the control action of the driver assist system (9) is the execution of an emergency routine, and preferably the emergency routine includes a stop routine for stopping the working machine (1) and/or an evasion routine for evasion of the working machine (1) from the obstacle.

11. A self-propelled agricultural working machine **characterised in that** the working machine is provided and adapted to carry out a method according to one of the preceding claims.

12. A self-propelled agricultural working machine according to claim 11 **characterised in that** the sensor fusion module (19) is provided by the driver assist system (9) of the working machine (1).

## Revendications

1. Procédé de fonctionnement d'une machine de travail agricole automotrice (1) comprenant au moins un organe de travail (3-8) et comprenant un système d'assistance à la conduite (9) pour générer des actions de commande à l'intérieur de la machine de travail (1), un agencement de capteur (10) étant prévu pour générer des informations d'environnement, le système d'assistance à la conduite (9) générant les actions de commande sur la base des informations d'environnement, l'agencement de capteur (10) comportant un système de capteur à caméra (11) et un système de capteur à laser (12), lesquelles génèrent respectivement des informations de capteur sur une zone d'environnement prédéterminée, pertinente (13) de la machine de travail (1),
les informations de capteur du système de capteur à caméra (11) étant disponibles sous la forme d'images de caméra de sortie (14),
**caractérisé en ce que** le système d'assistance à la conduite (9) comporte un système de traitement d'images (15) pour traiter des images de caméra de sortie (14), **en ce que** les images de caméra de sortie (14) sont segmentées en segments d'images (18) par le système de traitement d'images (15) selon une consigne de segmentation, **en ce qu'**un module de fusion de capteurs (19) est prévu et **en ce que** les images de caméra segmentées (14') sont fusionnées par le module de fusion de capteurs (19) avec les informations de capteur du système de capteur à laser (12).

2. Procédé selon la revendication 1, **caractérisé en ce que** les informations de capteur du système de capteur à laser (12) sont des information de hauteur par rapport au plan de champ (20).

3. Procédé selon la revendication 1 ou 2, **caractérisé en ce que**, dans le cadre de la fusion de capteurs, à au moins une partie des segments d'images (18) est associée respectivement au moins une, de préférence exactement une, information de hauteur qui est dérivée des informations de capteur du système de capteur à laser (12) pour le segment d'environnement qui correspond au segment d'image respectif (18).

4. Procédé selon une des revendications précédentes, **caractérisé en ce que** les segments d'images (18) sont classifiés par le système de traitement d'images (15) selon une consigne de classification en classes avec des propriétés de classe, de sorte qu'aux segments d'images (18) est respectivement associée une classe, et **en ce que** les informations de capteur du système de capteur à laser (12) sont prises en compte lors de la classification.

5. Procédé selon une des revendications précédentes, **caractérisé en ce que** la propriété de classe d'une classe est définie par l'existence d'une culture de produit à récolter (21) et/ou **en ce que** la propriété de classe d'une classe est définie par l'existence d'une culture de produit sur pied (22) et/ou **en ce que** la propriété de classe d'une classe est définie par l'existence d'un obstacle vivant (23) et/ou **en ce que** la propriété de classe d'une classe est définie par l'existence d'un obstacle non vivant et/ou **en ce que** la propriété de classe d'une classe est définie par l'existence d'une allée de roulement (24) et/ou **en ce que** la propriété de classe d'une classe est définie par l'existence d'une zone récoltée (25) et/ou **en ce que** la propriété de classe d'une classe est définie par l'existence d'un bord de culture (26).

6. Procédé selon une des revendications précédentes, **caractérisé en ce que** par le système de traitement d'images (15) est générée une image de visualisation (28) dans laquelle l'image de caméra de sortie (14) est superposée avec au moins une partie des segments d'image classifiés.

7. Procédé selon une des revendications précédentes, **caractérisé en ce que**, dans l'image de visualisation (28), les segments d'images (18) sont représentés par des couleurs différentes en fonction de la classe respectivement associée.

8. Procédé selon une des revendications précédentes, **caractérisé en ce que** des segments d'images (18) de classes prédéterminées ne sont pas visualisés dans l'image de visualisation.

9. Procédé selon une des revendications précédentes, **caractérisé en ce que** le système d'assistance à la conduite (9) comporte une interface homme-machine (29), et **en ce qu'**une action de commande est la délivrance de l'image de visualisation (28) par l'intermédiaire de l'interface homme-machine (29) et/ou, en fonction des segments d'images classifiés, la délivrance d'un message d'alerte par l'intermédiaire de l'interface homme-machine (29).

10. Procédé selon une des revendications précédentes, **caractérisé en ce que**, pour le cas où les segments d'images classifiés représentent un obstacle sur le trajet de déplacement à venir (30) de la machine de travail (1), l'action de commande du système d'assistance à la conduite (9) est l'exécution d'une routine d'urgence, de préférence **en ce que** la routine d'urgence inclut une routine d'arrêt pour immobiliser la machine de travail (1) et/ou une routine d'évitement pour que la machine de travail (1) évite l'obstacle.

11. Machine de travail agricole automotrice, **caractérisée en ce que** la machine de travail est prévue et agencée pour réaliser un procédé selon une des revendications précédentes.

12. Machine de travail agricole automotrice selon la revendication 11, **caractérisée en ce que** le module de fusion de capteurs (19) est fourni par le système d'assistance à la conduite (9) de la machine de travail (1) .
